# EUROPEAN PATENT APPLICATION

(11) **EP 4 564 800 A1**
(43) Date of publication of application: **04.06.2025**
(21) Application number: 24214834.4
(22) Date of filing: 22.11.2024
(51) Int. Cl.: H04N 1/00, G06F 3/12, H04N 1/44, G06K 15/00

(54) **INFORMATION PROCESSING APPARATUS THAT CAUSES DISPLAY DEVICE, WHEN EXECUTING REMOTE PROCESS, TO DISPLAY SCREEN NOT INCLUDING DETAIL OF REMOTE PROCESSING, AND IMAGE FORMING APPARATUS**

(30) Priority: 01.12.2023 JP 2023203832
(71) Applicant: KYOCERA Document Solutions Inc., Osaka-shi, Osaka, 540-8585 (JP)
(72) Inventor: TSUJI, Shuntaro, Osaka, 540-8585 (JP); OKAMOTO, Hironori, Osaka, 540-8585 (JP)
(74) Representative: Herrero & Asociados, S.L.

(57) **Abstract**

An information processing apparatus (1) includes an operation device (47), a display device (473), a communication device (91), and a control device (10) that acts as a controller (100). The controller (100) establishes remote connection with an external device through the communication device (91), and executes a remote process according to a remote instruction transmitted from the remotely connected external device, transmits image data representing a remote screen, serving as an operation screen to be displayed on the display device (473) when the remote process is executed, to the external device, and executes, at a predetermined timing while the information processing apparatus (1) is in operation in remote connection with the external device, a concealing display operation including causing the display device (473) to display a predetermined substitute screen not containing an operation detail related to the remote process, instead of causing the display device (473) to display the remote screen.

## Description

### BACKGROUND

The present invention relates to an information processing apparatus and an image forming apparatus that are remotely operable.

A remote maintenance function for an image forming apparatus is widely known. For example, the image forming apparatus transmits image data representing an operation screen displayed on a display device of the image forming apparatus, via a network, to a remotely connected external device, such as a personal computer (PC) operated by a service person in charge of the maintenance work, to thereby share the screen between the image forming apparatus and the external device.

### SUMMARY

The invention proposes further improvement of the foregoing technique.

In an aspect, the invention provides an information processing apparatus including an operation device, a display device, a communication device, and a control device. To the operation device, an instruction from a user is inputted. The communication device performs data communication with an external device. The control device includes a processor, and acts as a controller when the processor executes a control program. The controller causes the display device to display an operation screen, according to the instruction inputted to the operation device. The controller establishes remote connection with the external device through the communication device, and executes a remote process according to a remote instruction transmitted from the remotely connected external device, transmits image data representing a remote screen, serving as the operation screen to be displayed on the display device when the remote process is executed, to the external device, and executes, at a predetermined timing while the information processing apparatus is in operation in remote connection with the external device, a concealing display operation including causing the display device to display a predetermined substitute screen not containing an operation detail related to the remote process, instead of causing the display device to display the remote screen.

In another aspect, the invention provides an image forming apparatus including the foregoing information processing apparatus, and an image forming device. The image forming device forms an image on a recording medium.

### BRIEF DESCRIPTION OF THE DRAWINGS

Fig. 1 is a functional block diagram schematically showing an essential internal configuration of an image forming apparatus;
Fig. 2 is a schematic diagram for explaining a flow from establishment of remote connection to disconnection thereof;
Fig. 3 is a schematic drawing showing an example of an operation screen;
Fig. 4 is a schematic drawing showing an example of an exclusive screen;
Fig. 5 is a flowchart showing an example of a remote connection process;
Fig. 6 is a flowchart showing another example of the remote connection process; and
Fig. 7 is a flowchart showing still another example of the remote connection process.

### DETAILED DESCRIPTION

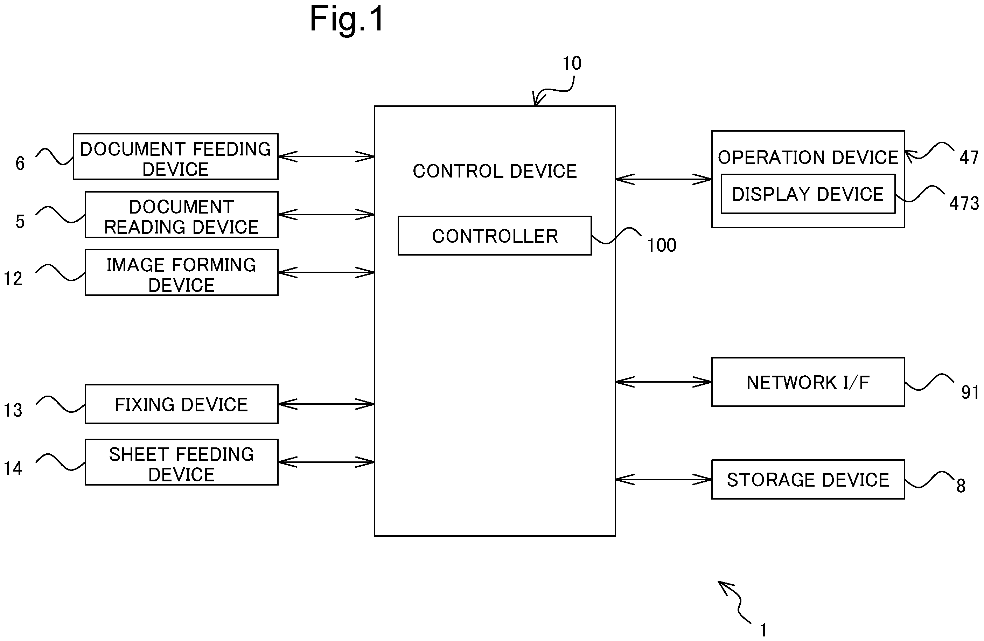

Hereafter, an information processing apparatus according to some embodiments of the invention will be described, with reference to the drawings. The information processing apparatus according the embodiments of the invention is, for example, an image forming apparatus. Fig. 1 is a functional block diagram schematically showing an essential internal configuration of an image forming apparatus 1 according to a first embodiment of the invention. The image forming apparatus 1 is a multifunction peripheral having a plurality of functions, such as copying, printing, scanning, and facsimile transmission.

The image forming apparatus 1 includes a control device 10, a document feeding device 6, a document reading device 5, an image forming device 12, a fixing device 13, a sheet feeding device 14, an operation device 47, a network interface (I/F) 91, and a storage device 8.

The document feeding device 6 is openably connected to the upper face of the document reading device 5, for example via a hinge. The document feeding device 6 serves as a document retention cover, when a document placed on a platen glass is to be read. The document feeding device 6 is what is known as an automatic document feeder (ADF). The document feeding device 6 includes a document tray, to supply the document placed thereon to the document reading device 5.

The document reading device 5 includes a scanner. The document reading device 5 reads the document delivered from the document feeding device 6, or a document placed on the platen glass.

To perform the document reading operation, the image forming apparatus 1 operates as follows. The document reading device 5 optically reads the image on the document delivered from the document feeding device 6 to the document reading device 5, or placed on the platen glass, and generates image data. The image data generated by the document reading device 5 is stored, for example, in an image memory.

To perform the image forming operation, the image forming apparatus 1 operates as follows. The image forming device 12 includes a photoconductor drum, a charging device, an exposure device, a developing device, and a primary transfer device for each of the colors. The image forming device 12 includes a mechanism that forms an image on a recording sheet, exemplifying the recording medium in the invention, by means of secondary transfer via an intermediate transfer belt. The image forming device 12 forms a toner image on the recording sheet delivered from the sheet feeding device 14, thereby producing a printed material, on the basis of the image data generated through the document reading operation, image data stored in the image memory, or image data received from a computer connected via the network.

The sheet feeding device 14 includes a sheet cassette, and also a pickup roller, a transport roller, a transport route, and a drive mechanism for each of the rollers, which are configured to draws out the recording sheet from the sheet cassette and transport the recording sheet to the image forming device 12.

The fixing device 13 includes a heat roller, a pressure roller, and a drive mechanism therefor. The fixing device 13 heats and presses the recording sheet on which the toner image has been formed by the image forming device 12, at a nip region defined between the heat roller and the pressure roller, to thereby fix the toner image onto the recording sheet. The recording sheet that has undergone the fixing process is delivered to an output tray.

The operation device 47 includes various hard keys to be operated by the user. The operation device 47 receives the user's instructions inputted with the hard keys, to execute the functions and operations that the image forming apparatus 1 is configured to perform, for example the image forming operation. The operation device 47 also receives, through a touch panel provided on a display device 473, the user's instruction based on the touch operation performed by the user on the screen displayed on the display device 473.

The display device 473, having a rectangular shape, is constituted of, for example, a liquid crystal display (LCD). When the user touches a button or a key displayed on the screen, the touch panel receives the instruction corresponding to the touched position. In this case, the touch panel acts as a part of the operation device.

The network I/F 91 is a communication interface that transmits and receives various types of data to and from an external device (e.g., a server or a PC) inside a local area, or on the internet. The network I/F 91 exemplifies the communication device in the invention.

The storage device 8 is a large-capacity storage device such as a hard disk drive (HDD) or a solid-state drive (SSD), and contains various control programs.

The control device 10 includes a processor, a random-access memory (RAM), a read-only memory (ROM), and an exclusive hardware circuit. The processor is, for example, a central processing unit (CPU), an application specific integrated circuit (ASIC), or a micro processing unit (MPU).

The control device 10 acts as a controller 100, when the processor operates according to the control program stored in the storage device 8. Here, the controller 100 may be constituted in the form of a hardware circuit, instead of being realized by the operation of the control device 10 according to the control program. This also applies to other embodiments, unless otherwise specifically noted.

The controller 100 serves to control the overall operation of the image forming apparatus 1. The controller 100 is connected to the document feeding device 6, the document reading device 5, the image forming device 12, the fixing device 13, the sheet feeding device 14, the operation device 47, the network I/F 91, and the storage device 8, and controls the operation of the mentioned components. For example, the controller 100 executes some processings required for the image forming operation to be performed by the image forming apparatus 1, including causing the display device 473 to display an operation screen, on the basis of operation data indicating the user's instruction inputted to the operation device 47.

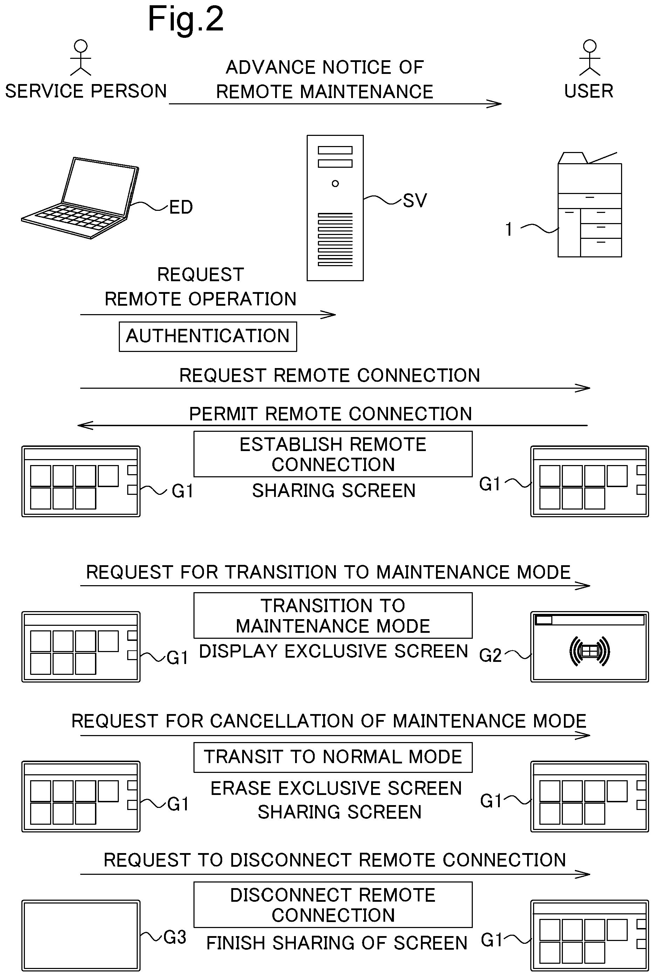

The image forming apparatus 1 is configured to establish remote connection with an external device ED (see Fig. 2) through a server SV (see Fig. 2) through the network, and receive a remote operation from the external device ED now remotely connected. Upon receipt of an instruction to the image forming apparatus 1, transmitted from the remotely connected external device ED (remote instruction), through the network I/F 91, the controller 100 executes various types of remote process, according to the remote instruction received.

The controller 100 transmits the image data representing the operation screen (remote screen), to be displayed on the display device 473 when the remote process is executed, to the external device ED. At this point, the external device ED becomes able to execute the remote operation with respect to the image forming apparatus 1.

The controller 100 operates the image forming apparatus 1, either in a normal mode or in a maintenance mode. The maintenance mode includes causing the image forming apparatus 1 to execute a predetermined maintenance operation and maintenance process. The normal mode includes causing the image forming apparatus 1 to execute operations other than the maintenance operation and the maintenance process, in other words the regular operations such as an image forming operation, a scanning operation, a transmitting operation, and a facsimile operation according to the user's instruction inputted to the operation device 47, or the image forming operation according to print data and print instruction transmitted from the external device.

The controller 100 executes, at a predetermined timing while being remotely connected to the external device ED, a concealing display operation including causing the display device 473 to display a predetermined substitute screen not containing an operation detail to be displayed when the remote process is executed according to the remote instruction, instead of causing the display device 473 to display the operation screen (remote screen) represented by the image data transmitted to the external device ED.

Fig. 2 is a schematic diagram for explaining a process through which the remote connection is established between the image forming apparatus 1 and the external device ED, the image forming apparatus 1 transits to the maintenance mode, and the remote connection with the external device ED is disconnected.

A service person, in charge of the maintenance work, requests the server SV that builds the remote connection environment using the external device ED such as a PC, to execute the remote operation with respect to the device being managed by the server SV, the image forming apparatus 1 inclusive.

Then a log-in process for authentication is executed between the external device ED and the server SV. When the service person is qualified to execute the remote operation by the server SV, the operation screen for selecting a target device of the remote operation is displayed on (the display of) the external device ED. When the service person inputs, through the operation screen, an instruction for selecting the image forming apparatus 1 as the target device of the remote operation, the external device ED transmits a request for remote connection, to the image forming apparatus 1 through the server SV.

Upon receipt of the request for remote connection through the network I/F 91 (exemplifying the communication device), the controller 100 of the image forming apparatus 1 causes the display device 473 to display a screen indicating the receipt of the request for remote connection. When the operation device 47 receives the instruction to permit the request from the user, the controller 100 transmits a permission signal to the external device ED, through the network I/F 91.

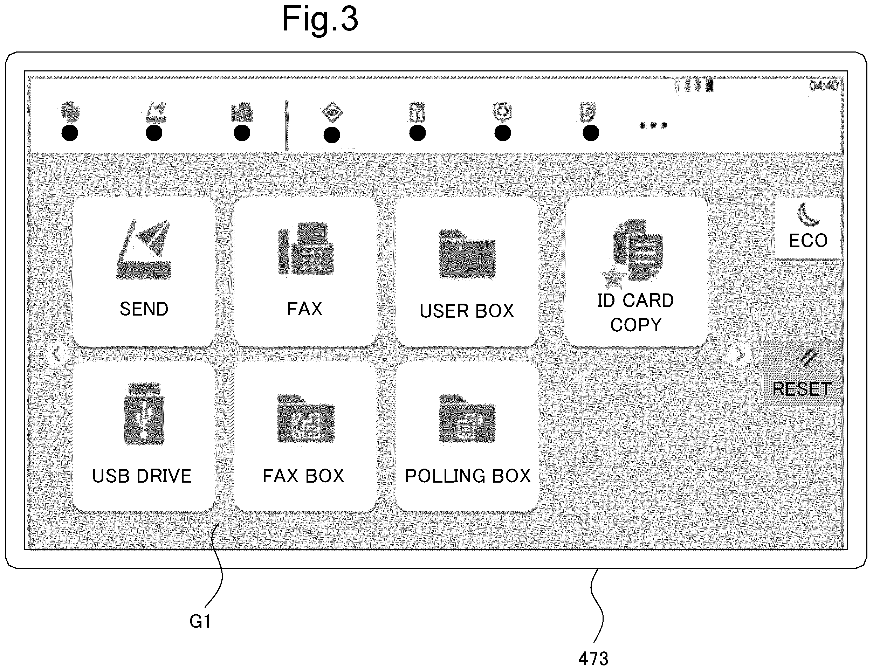

After the permission signal is transmitted, the remote connection is established between the image forming apparatus 1 and the external device ED, and the screen is shared therebetween. For example, an operation screen G1 shown in Fig. 3 is displayed on the display device 473 of the image forming apparatus 1, and the image data representing the operation screen G1 is transmitted from the image forming apparatus 1 to the external device ED, so that the same operation screen G1 is also displayed on the external device ED.

When the external device ED requests the image forming apparatus 1 to transit to the maintenance mode, while the remote connection is maintained therebetween, the image forming apparatus 1 switches the operation mode from the normal mode to the maintenance mode. The image forming apparatus 1 starts the concealing display operation, at the time of the transition (exemplifying the predetermined timing in the invention).

The concealing display operation includes, as described above, causing the display device 473 to display the predetermined substitute screen not containing an operation detail to be displayed when the remote process is executed according to the remote instruction, instead of causing the display device 473 to display the operation screen represented by the image data transmitted to the external device ED.

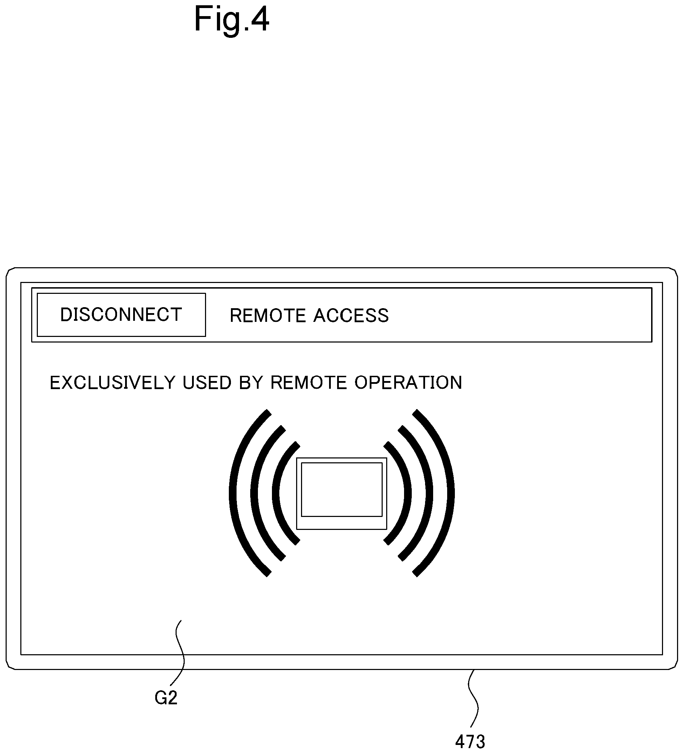

For example, the image forming apparatus 1 displays an exclusive screen G2 shown in Fig. 4 on the display device 473, as the predetermined substitute screen. Thus, the operation screen (e.g., maintenance screen) displayed on the external device ED during the operation in the maintenance mode, is kept from being displayed on the display device 473 of the image forming apparatus 1, so that the user of the image forming apparatus 1 is disabled from viewing the remote operation detail in the maintenance mode.

Upon receipt of a request for cancellation of the maintenance mode (transition to the normal mode) from the external device ED, through the network I/F 91, the controller 100 of the image forming apparatus 1 switches the operation mode to the normal mode. At this point, the controller 100 erases the exclusive screen G2 from the display device 473, and transmits the image data representing the operation screen supposed to be displayed in the normal mode (normal screen such as operation screen G1), to the external device ED through the network I/F 91.

Accordingly, the same operation screen as that displayed on the external device ED (e.g., operation screen G1) is also displayed on the display device 473 of the image forming apparatus 1. Therefore, the screen is shared between the image forming apparatus 1 and the external device ED. Upon receipt of a request to disconnect the remote connection from the external device ED, the controller 100 of the image forming apparatus 1 disconnects the remote connection with the external device ED. Accordingly, the screen is no longer shared between the image forming apparatus 1 and the external device ED. Therefore, a screen different from the one displayed on the image forming apparatus 1 (e.g., operation screen G1) is displayed on the external device ED.

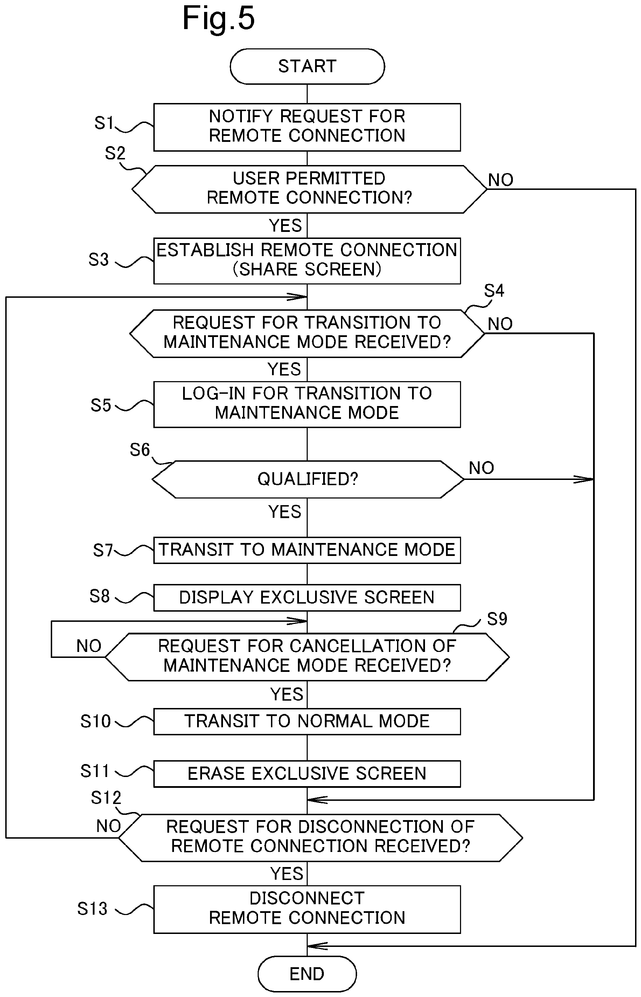

Hereunder, the remote connection process according to the first embodiment, to be executed when the image forming apparatus 1 is in the remote operation, will be described. Fig. 5 is a flowchart showing the remote connection process according to the first embodiment. The remote connection process is executed when the controller 100 receives the remote connection request from the external device ED, through the network I/F 91.

Upon receipt of the request for the remote connection, the controller 100 causes the display device 473 to display a screen indicating that the request for the remote connection has been received (step S1). Accordingly, the user is made aware that the remote connection request has been received from the external device ED.

When the operation device 47 receives the user's instruction to permit the remote connection request (YES at step S2), the controller 100 executes the operation for establishing the remote connection with the external device ED (step S3). To be more specific, the controller 100 transmits the image data representing the operation screen displayed on the display device 473, to the external device ED through the network I/F 91. Accordingly, the operation screen is also displayed on the display device of the external device ED, so that the screen is shared between the image forming apparatus 1 and the external device ED.

Here, in the case where the operation device 47 receives the user's instruction to reject the remote connection request (NO at step S2), the controller 100 finishes the remote connection process.

After step S3, the controller 100 decides whether a transit request, requesting for transition of the operation mode to the maintenance mode, from the remotely connected external device ED (step S4). Upon deciding that the transit request has been received (YES at step S4), the controller 100 executes the log-in process for the transition to the maintenance mode (step S5), and decides whether the operator of the external device ED is a legitimate service person (qualified for executing the maintenance work) (step S6). In other words, the controller 100 executes the authentication process.

Upon deciding that the operator of the external device ED is the legitimate service person (YES at step S6), the controller 100 switches the operation mode of the image forming apparatus 1 to the maintenance mode (step S7). Upon switching the operation mode of the image forming apparatus 1 to the maintenance mode, the controller 100 causes the display device 473 to display the exclusive screen G2 shown in Fig. 4 (step S8).

After step S8, the controller 100 decides whether a cancel request of the maintenance mode has been received, from the remotely connected external device ED (step S9). Upon deciding that the cancel request has been received (YES at step S9), the controller 100 switches the operation mode to the normal mode (step S10).

At this point, the controller 100 erases the exclusive screen G2 from the display device 473 (step S11), and displays the normal screen (e.g., operation screen G1). Further, the controller 100 transmits the image data representing the normal screen to the external device ED, through the network I/F 91. Therefore, the normal screen is shared between the image forming apparatus 1 and the external device ED.

Here, upon deciding that the cancel request has not been received (NO at step S9), the controller 100 repeats the operation of step S9.

The controller 100 decides whether the request for disconnection of the remote connection, which may be transmitted from the remotely connected external device ED, has been received (step S12). Until deciding that the disconnection request has been received (NO at step S12), the controller 100 repeats the operation of step S4 to step S12.

Upon deciding that the disconnection request has been received (YES at step S12), the controller 100 disconnects the remote connection with the external device ED (step S13). After step S13, the controller 100 finishes the remote connection process.

In the case of deciding that the request for transition to the maintenance mode has not been received (NO at step S4), and deciding that the operator of the external device ED is not a legitimate service person (NO at step S6), the controller 100 proceeds to step S12.

Now, the operation mode of the existing information processing apparatus, such as the image forming apparatus, includes the normal mode for realizing regular operations to be utilized by general users, and the maintenance mode to be utilized only by limited persons, such as the service person in charge of the maintenance work.

The information processing apparatus is provided with settings that can be modified only in the maintenance mode. To modify such settings, the service person is required to input confidential information such as a personal identification number (PIN) code. In addition, on the display device of the information processing apparatus, a screen not supposed to be displayed in the normal mode may be displayed in the maintenance mode.

It is not desirable that the confidential information such as the PIN code, and the screen to be displayed only in the maintenance mode, are disclosed to the general user. However, in the case where the screen is shared, in the remote maintenance operation, between the information processing apparatus (target of the maintenance work) and the external device being operated by the service person, the information that should not be disclosed to the general user, such as the confidential information, may be exposed to the general user.

According to the first embodiment, in contrast, the operation screen, represented by the image data transmitted to the remotely connected external device ED, is not displayed on the display device 473, but the predetermined substitute screen (exclusive screen G2), different from the operation screen, is displayed on the display device 473. Therefore, while the image forming apparatus 1 is in operation in the maintenance mode, the confidential information such as the PIN code to be inputted to carry out the maintenance operation, and the screen supposed to be displayed only in the maintenance operation, are not displayed on the display device 473.

As result, the confidential information, and the operation detail for the maintenance mode are kept from being exposed to the general user, during the remote maintenance operation of the image forming apparatus 1. Consequently, the arrangement according to the first embodiment enables the remote operation to be executed with sufficient confidentiality, without exposing to the general user at least a part of the information indicating the detail of the remote operation, while the image forming apparatus 1 is in remote operation.

Here, the remote connection may be accidentally disconnected, for some reason such as communication failure, against the intention of the service person or the user. In the case where, when the remote connection with the external device ED is disconnected, the controller 100 erases the exclusive screen G2 from the display device 473, and displays the operation screen supposed to be displayed on the display device 473 in the maintenance mode (e.g., maintenance screen), the confidential information inputted for the remote maintenance operation, and the operation detail in the maintenance mode, may be exposed to the user.

Accordingly, as a variation of the first embodiment, the controller 100 may be configured to maintain the display of the exclusive screen G2 on the display device 473, even when the remote connection with the external device ED is disconnected while the exclusive screen G2 is displayed on the display device 473. Such an arrangement further assures that the confidential information is kept from being exposed to the general user.

As another variation, the controller 100 may be configured to switch the operation mode from the maintenance mode to the normal mode, and switch the screen on the display device 473 from the exclusive screen G2 to the normal screen (e.g., operation screen G1), when the remote connection with the external device ED is disconnected while the exclusive screen G2 is displayed on the display device 473.

Hereunder, a second embodiment of the remote connection process, to be executed for the remote operation of the image forming apparatus 1, will be described. The second embodiment is different from the first embodiment, in that the controller 100 executes the concealing display operation, upon receipt of a predetermined concealment request from the remotely connected external device ED, through the network I/F 91 (exemplifying the predetermined timing in the invention). For example, the service person transmits a concealment request command, from the external device ED to the image forming apparatus 1.

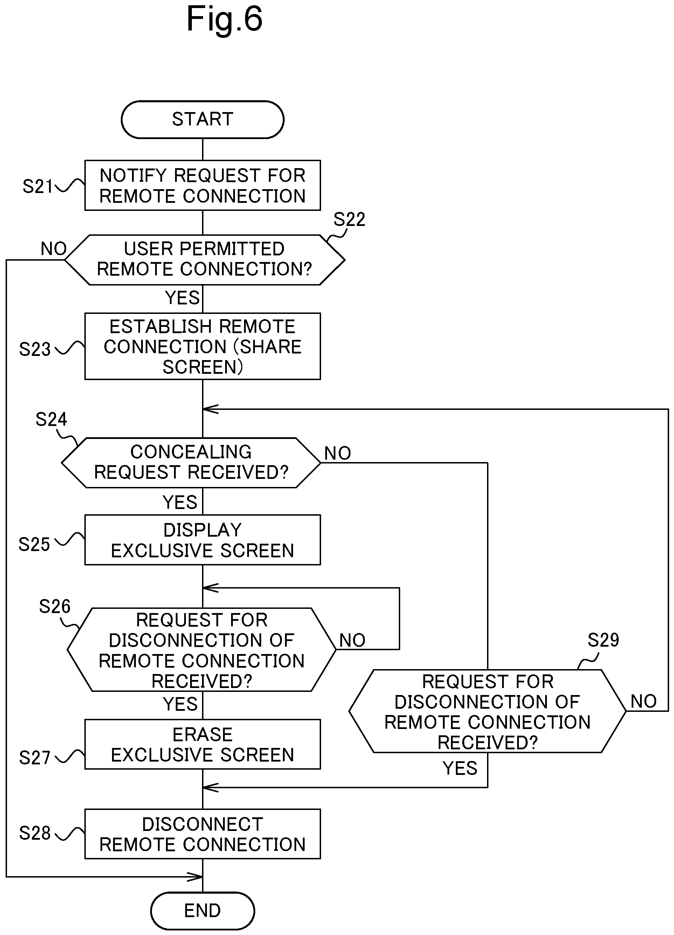

Fig. 6 is a flowchart showing the second embodiment of the remote connection process. Referring to Fig. 6, the remote connection process according to the second embodiment will be described. The remote connection process is started when the controller 100 receives the remote connection request from the external device ED, through the network I/F 91.

Upon receipt of the request for the remote connection, the controller 100 causes the display device 473 to display a screen indicating that the request for the remote connection has been received (step S21). When the operation device 47 receives the user's instruction to permit the remote connection request (YES at step S22), the controller 100 executes the operation for establishing the remote connection with the external device ED (step S23).

To be more specific, the controller 100 transmits the image data representing the operation screen displayed on the display device 473 (remote screen), to the external device ED through the network I/F 91. Accordingly, the operation screen is also displayed on the display device of the external device ED, so that the screen is shared between the image forming apparatus 1 and the external device ED. At this point, the controller 100 causes the display device 473 to display, for example, the maintenance screen displayed in the maintenance mode.

In contrast, upon deciding that the operation device 47 has receives the user's instruction to reject the remote connection request (NO at step S22), the controller 100 finishes the remote connection process.

Upon deciding, after step S23, that the predetermined concealment request has been received from the remotely connected external device ED (YES at step S24), controller 100 executes the concealing display operation, thereby causing the display device 473 to display the exclusive screen G2 shown in Fig. 4 (step S25).

After step S25, the controller 100 decides whether the request for disconnection of the remote connection has been received, from the remotely connected external device ED (step S26). Upon deciding that the disconnection request has been received (YES at step S26), the controller 100 erases the exclusive screen G2 from the display device 473, and causes the display device 473 to display the operation screen to be displayed at this point according to the operation status of the image forming apparatus 1, in other words the operation screen represented by the image data transmitted at this point to the external device ED (i.e., the latest operation screen displayed on the external device ED) (step S27).

After step S27, the controller 100 disconnects the remote connection with the external device ED (step S28). After step S28, the controller 100 finishes the remote connection process. Here, upon deciding at step S26 that the disconnection request has not been received (NO at step S26), the controller 100 repeats the operation of step S26.

Upon deciding that the concealment request has not been received (NO at step S24), the controller 100 decides whether the request for disconnection of the remote connection has been received from the remotely connected external device ED (step S29).

Upon deciding that the disconnection request has been received (YES at step S29), the controller 100 disconnects the remote connection with the external device ED (step S28). At this point, for example the maintenance screen is displayed on the display device 473. After step S28, the controller 100 finishes the remote connection process. In contrast, in the case of deciding that the disconnection request has not been received (NO at step S29), controller 100 returns to step S24.

The mentioned arrangement according to the second embodiment enables the service person operating the external device ED to restrict the display device 473 of the image forming apparatus 1 from displaying the maintenance screen, at a desired timing, while the image forming apparatus 1 is in remote operation. Therefore, the remote operation can be executed with high confidentiality, without allowing the general user to view the detail of the remote operation.

Here, in the first and second embodiments, the exclusive screen G2 shown in Fig. 4 is adopted as the substitute screen to be displayed on the display device 473 of the image forming apparatus 1, to prevent, for example, the maintenance screen from being displayed on the display device 473 of the image forming apparatus 1.

In a third embodiment, in contrast, while the remote process according to the remote instruction (e.g., maintenance process) is being executed in the maintenance mode, by the image forming apparatus 1, the controller 100 causes the display device 473 to display, as the substitute screen, a prohibition screen that accepts an input of an instruction related to the operation executed in the normal mode, but rejects an input of an instruction related to the remote process (e.g., maintenance process).

In this case, the controller 100 causes the image forming apparatus 1 to execute the operation in the normal mode, according to the user's instruction received by the operation device 47, in parallel with the maintenance process. Therefore, an instruction related to an operation that interferes with the ongoing maintenance process can be rejected, so that the continued execution of the maintenance operation, and the operation in the normal mode can both be realized.

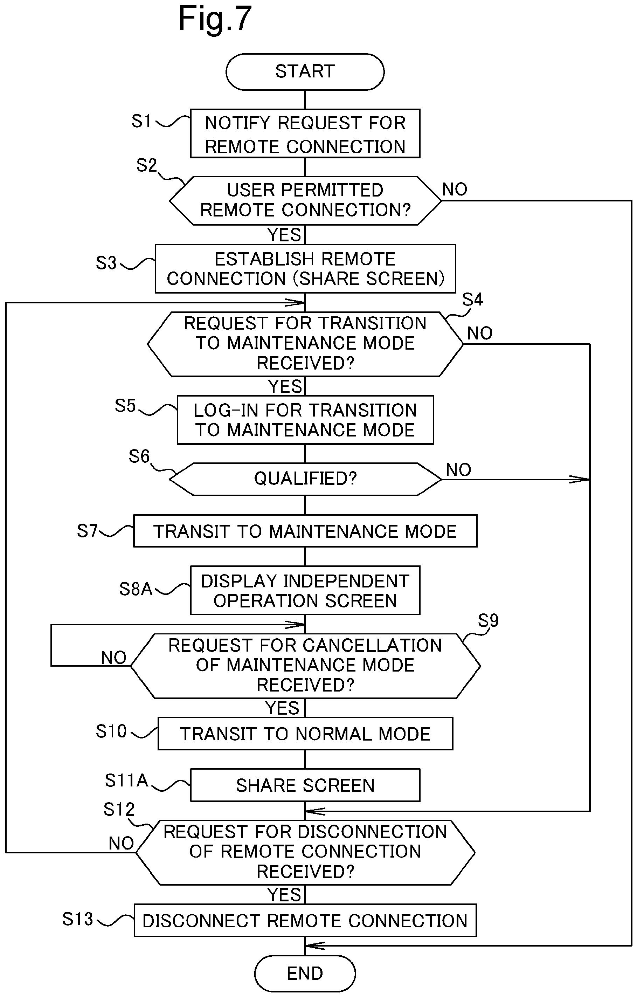

Fig. 7 is a flowchart showing the third embodiment of the remote connection process for the remote operation of the image forming apparatus 1. Referring to Fig. 7, the remote connection process according to the third embodiment will be described. In the remote connection process shown in Fig. 7, step S8A and step S1 1A are different, when compared with the remote connection process shown in Fig. 5.

At step S8A, the controller 100 causes the display device 473 to display, as the substitute screen, the prohibition screen that accepts an input of an instruction related to the normal mode, but rejects an input of an instruction related to the remote process (e.g., maintenance process). At step S11A, the controller 100 erases the prohibition screen from the display device 473, and also causes the display device 473 to display the operation screen to be displayed at this point according to the operation status of the image forming apparatus 1, in other words the operation screen represented by the image data transmitted at this point to the external device ED (i.e., the latest operation screen displayed on the external device ED).

Therefore, the user can operate the image forming apparatus 1, even during the remote maintenance period. However, the controller 100 does not execute an operation that interferes with the ongoing maintenance operation. For example, while such a maintenance operation as adjusting the count value of the printed sheets is being executed, the controller 100 does not execute the operation related to the printing job, despite an instruction related to the printing job having been instructed by the user, but executes the operation independent from the printing operation, such as the operation related to the scanner, or display or editing of the address book.

According to the second and third embodiments, when the controller 100 executes the concealing display operation, thereby causing the display device 473 to display the exclusive screen G2 (see Fig. 4), or the prohibition screen, the confidential information required for the remote maintenance operation, and the operation detail in the maintenance mode can be kept from being exposed to the general user, while either of the mentioned screens is displayed. However, until the exclusive screen G2 or the prohibition screen is displayed on the display device 473, the confidential information may be exposed to the general user.

Accordingly, as still another variation, the controller 100 may keep from displaying characters received through the network I/F 91 from the remotely connected external device ED, on the display device 473. For example, the controller 100 may substitute the numerals or characters representing the PIN code, transmitted from the external device ED, with symbols such as an asterisk (*).

In other words, according to such variation, the controller 100 causes the display device 473, while executing the operation according to the remote instruction (exemplifying the predetermined timing in the invention), to display, as the substitute screen, the operation screen (remote screen) represented by the image data transmitted to the external device ED at the time of the remote connection, and in such operation screen (remote screen), the character information received from the remotely connected external device ED through the network I/F 91 is kept from being displayed. Such an arrangement can also prevent the confidential information required for the maintenance operation from being exposed to the general user.

The invention may be modified in various manners, without limitation to the foregoing embodiments. Further, the configurations and processings described in the embodiments with reference to Fig. 1 to Fig. 7 are merely exemplary, and in no way intended to limit the invention to those configuration.

## Claims

1. An information processing apparatus (1) comprising:
an operation device (47) to which an instruction from a user is inputted;
a display device (473);
a communication device (91) that performs data communication with an external device; and
a control device (10) including a processor, and configured to act, when the processor executes a control program, as a controller (100) that causes the display device (473) to display an operation screen, according to the instruction inputted to the operation device (47),
wherein the controller (100) is configured to:
establish remote connection with the external device through the communication device (91), and execute a remote process according to a remote instruction transmitted from the remotely connected external device;
transmit image data representing the remote screen, serving as the operation screen to be displayed on the display device (473) when the remote process is executed, to the external device; and
execute, at a predetermined timing while the information processing apparatus (1) is in operation in remote connection with the external device, a concealing display operation including causing the display device (473) to display a predetermined substitute screen not containing an operation detail related to the remote process, instead of causing the display device (473) to display the remote screen.

2. The information processing apparatus (1) according to claim 1,
wherein the controller (100) is configured to:
operate the information processing apparatus (1) in an operation mode either a normal mode or a maintenance mode; and
execute the concealing display operation at the predetermined timing, defined as when a transition instruction from the normal mode to the maintenance mode is received through the operation device (47), while being remotely connected to the external device.

3. The information processing apparatus (1) according to claim 2,
wherein the controller (100) switches the operation mode from the maintenance mode to the normal mode, when the remote connection with the external device is disconnected while the substitute screen is displayed on the display device (473), and causes the display device (473) to switch a display screen from the substitute screen to a normal screen, corresponding to the operation screen to be displayed during an operation in the normal mode.

4. The information processing apparatus (1) according to claim 2,
wherein, when the remote process is being executed in the maintenance mode, the controller (100) causes the display device (473) to display, as the substitute screen, a prohibition screen that accepts an instruction related to a normal operation executed in the normal mode, but rejects an instruction related to the remote process.

5. The information processing apparatus (1) according to claim 1,
wherein the controller (100) executes the concealing display operation, at the predetermined timing defined as when a predetermined concealment request is received from the remotely connected external device, through the communication device (91).

6. The information processing apparatus (1) according to claim 1,
wherein the controller (100) continues with displaying the substitute screen on the display device (473), despite the remote connection with the external device having been disconnected, while the substitute screen is displayed on the display device (473).

7. The information processing apparatus (1) according to claim 1,
wherein the controller (100) is configured to:
define the predetermined timing as when the remote process is being executed;
cause the display device (473) to display the remote screen as the substitute screen; and
erase character information received from the remotely connected external device through the communication device (91), from the remote screen.

8. The information processing apparatus (1) according to claim 2,
wherein the controller (100) is configured to:
execute a log-in process upon receipt of an instruction to transit to the maintenance mode through the operation device (47);
execute the concealing display operation upon deciding that an operator of the external device is a legitimate service person; and
keep from executing the concealing display operation, upon deciding that the operator of the external device is not a legitimate service person.

9. An image forming apparatus (1) comprising:
the information processing apparatus (1) according to any of claims 1 to 8; and
an image forming device (12) that forms an image on a recording medium.
